# EUROPEAN PATENT SPECIFICATION

(11) **EP 2 247 639 B1**
(45) Date of publication and mention of the grant of the patent: **13.03.2019**
(21) Application number: 09703444.1
(22) Date of filing: 20.01.2009
(51) Int. Cl.: C08G 18/66, C08G 18/76, C08L 75/04

(54) **SOFT THERMOPLASTIC ELASTOMER COMPOSITION**
WEICHE THERMOPLASTICHE ELASTOMERE ZUSAMMENSETZUNGEN
COMPOSITION D'ÉLASTOMÈRE THERMOPLASTIQUE SOUPLE

(30) Priority: 24.01.2008 US 23144; 02.09.2008 US 93568
(43) Date of publication of application: 10.11.2010
(73) Proprietor: Lubrizol Advanced Materials, Inc., Cleveland, OH 44141-3247 (US)
(72) Inventor: MELTZER, Donald, A., Akron Ohio 44333 (US); HORRION, Jacques P.E.J., B-4130 Tilff (BE); MONTAGUE, Gilbert, T., Independence Ohio 44131 (US); MOSIER, Patrick, E., Bay Village Ohio 44140 (US)
(74) Representative: dompatent von Kreisler Selting Werner - Partnerschaft von Patent- und Rechtsanwälten mbB
(86) International application number: PCT/US2009/031435
(87) International publication number: WO 2009/094332

(56) References cited:
- EP-A- 0 942 044
- EP-A- 1 127 915
- DE-A1- 19 745 700
- JP-A- 1 193 352
- KR-A- 20040 066 524
- US-A- 4 223 112
- US-A- 4 332 920
- US-A- 5 959 059
- US-A1- 2003 137 078
- DATABASE WPI Week 199707 Thomson Scientific, London, GB; AN 1997-073188 XP002530051 & JP 08 319416 A (KURARAY CO LTD) 3 December 1996 (1996-12-03)
- DATABASE WPI Week 199943 Thomson Scientific, London, GB; AN 1999-510987 XP002554882 & JP 11 189780 A (NIPPON SEIKO KK) 13 July 1999 (1999-07-13)

## Description

### FIELD OF THE INVENTION

The present invention relates to soft, hydrophobic, semicrystalline, thermoplastic polyurethane compositions containing mineral oil that have a Shore A hardness which is within the range of 20 to 80. These polyurethane compositions often have a Shore A hardness which is within the range of 40 to 70. They also typically have an uncharacteristically low specific gravity, i.e., less than 1.0 or even less than 0.97. This hydrophobic thermoplastic polyurethane composition offers a unique array of characteristics that are highly desirable for utilization in manufacturing a variety of products. For instance, it can be used in overmolding soft grips onto consumer products and in protective coatings. Another embodiment of this invention relates to a soft, hydrophobic, semicrystalline, thermoplastic polyurethane having a melting point which is within the range of 80°C to 150°C and exhibit an uncharacteristically low specific gravity, i.e., less than 1.1 or even less than 1.0, This hydrophobic thermoplastic polyurethane offers a unique array of characteristics that are highly desirable for utilization in manufacturing a variety of products. For instance, it can be used in overmolding soft grips onto consumer products, in adhesives, in protective coatings, and as a modifier for polymeric hydrocarbons, such as polyolefins, or as a compatibilizer for polyolefin/TPU blends.

### BACKGROUND OF THE INVENTION

TPU (thermoplastic polyurethane) polymers are typically made by reacting (1) a hydroxyl terminated polyether or hydroxyl terminated polyester, (2) a chain extender, and (3) an isocyanate compound. Various types of compounds for each of the three reactants are disclosed in the literature. The TPU polymers made from these three reactants find use in various fields where products are made by melt processing the TPU and forming it into various shapes to produce desired articles by processes such as extrusion and molding. Important uses for TPU include manufacturing shoe soles, hoses, cable jacketing, coated fabrics such as conveyor belts, sewer liners and printing blankets, protective coatings, adhesives, and melt spun elastic fibers.

TPUs are segmented polymers having soft segments and hard segments. This feature accounts for their excellent elastic properties. The soft segments are derived from the hydroxyl terminated polyether or polyester and the hard segments are derived from the isocyanate and the chain extender. The chain extender is typically one of a variety of glycols, such as 1,4-butane glycol.

United States Patent 5,959,059 discloses a TPU made from a hydroxyl terminated polyether, a glycol chain extender, and a diisocyanate. This TPU is described as being useful for making fibers, golf ball cores, recreational wheels, and other uses.

In numerous applications, it would be desirable for the TPU to exhibit low hardness. In many of these applications, it would also be desirable for the TPU to be hydrophobic and to exhibit a low level of tensile set coupled with low specific gravity. The low specific gravity can be achieved via swelling the TPU in mineral oil. However, TPUs made with traditional polyols such as poly(butylene adipate) (PBAd), poly(ethylene oxide) (PEO) and poly(tetramethylene oxide) (PTMEG) typically will only absorb less than a few percent of mineral oils rendering soft TPUs having the desired combinations of physical characteristics elusive.
WPI-Abstract 1997-0733188 of JP-A-8319416 discloses a thermoplastic polymer composition comprising a hydrophobic thermoplastic polyurethane obtained by reacting a polyester diol, an organic diisocyanate and a chain extender; a block copolymer; a polyolefin resin and a paraffin oil. The polyester diol employed in the preparation of hydrophobic thermoplastic polyurethane has 30 to 100 wt.% of a 4-9C diol having a branched chain based on the total diol and a number average molecular weight of 1000 to 8000. The sheet or film made of the composition has improved elastic recovery, flexibility and dynamic properties.
The Abstract of KR-A-20040066524 published 27 July 2004, discloses a resin composition used to improve the texture of a molded article made of a hard resin by being adhered thereto, thereby providing soft feeling when touched by a hand. The resin composition is prepared by extruding a mixture comprising a polyolefin, a thermoplastic polyurethane resin and paraffin oil.
EP 0942044 discloses a thermoplastic polymer composition containing a block copolymer, a polyurethane block copolymer having a thermoplastic polyurethane elastomer block, a thermoplastic polyurethane elastomer and paraffin oil. The thermoplastic polyurethane elastomer is obtained by reacting high molecular weight diol, having a layer comprising the thermoplastic polymer composition and a layer of metal is disclosed.

Plastic handles of various shapes and sizes are found on many household items. Such household items include toothbrushes, shaving razors, hairbrushes, pens, tools, kitchen appliances and kitchen utensils. These household items have a variety of functions, but in most cases, it is desirable for the user to grip the handle of these items firmly, so that it does not fall out of the user's hand. In other cases, such as with a knife, it is desirable for the handle to be gripped with even more firmness so that leverage can be applied.

Because the handles of household items are normally made with a hard plastic, the simplest tasks can become problematic for some people, such as the elderly and those suffering from arthritis in the joints of their hands. This problem is compounded in cases where the handle of the article, such as a toothbrush or shaving razor, come into contact with water making it more slippery. For instance, when a toothbrush or razor is wet, it is more difficult to grip and can slip out of the user's hands. Other items such as tools and kitchen utensils can have handles that are difficult to hold or uncomfortable to grip because of the hardness of the plastic material. For persons suffering from arthritis, carpal tunnel syndrome or other hand injuries or infirmities, using basic household objects can become difficult or even impossible.

Most: people would prefer to hold objects with a softer handle that is more soothing to the touch and easier to grip. Accordingly, a need exists for soft grip handles that can be grasped firmly and comfortably and which require minimum strength and dexterity to grip and maneuver. There is, accordingly, a growing demand for a wide variety of articles that are soft and soothing to touch. It is, of course, also important for these articles to have the strength, durability, and rigidity needed in the applications where the article is used. This can be accomplished by overmolding a soft thermoplastic composition onto a hard thermoplastic substrate. However, there is a need for a soft thermoplastic elastomer composition that can be overmolded onto a hard thermoplastic resin substrate wherein the soft thermoplastic composition has lower hardness and low compression set. There is currently a need for a thermoplastic composition that has superior feel and comfort as characterized by a lower modulus to that which is obtained by using syndiotactic polypropylene copolymer, for example.

### SUMMARY OF THE INVENTION

The present invention relates to the following:
1. A soft, semicrystalline, thermoplastic polyurethane elastomer composition which is comprised of (I) a soft, semicrystalline hydrophobic thermoplastic polyurethane block copolymer which is comprised of the reaction product of (1) at least one hydrophobic polyol, wherein said hydrophobic polyols is a diacid polyester polyol made with dimerized fatty acids and wherein said dimer fatty acid contains from 26 to 44 carbon atoms, (2) a polyisocyanate, and (3) at least one chain extender containing 2 to 20 carbon atoms; wherein the hydrophobic polyol has a number average molecular weight which is within the range of 1,000 to 4,000 Daltons and; wherein the hydrophobic thermoplastic polyurethane block copolymer has a weight average molecular weight which is within the range of 50,000 to 1,000,000 Daltons; and (II) from 1 weight percent to 80 weight percent of a mineral oil based upon the total weight of the elastomer composition.
2. A soft, semicrystalline, thermoplastic polyurethane elastomer composition as specified in 1. wherein the polyisocyanate is a diisocyanate.
3. A soft, semicrystalline, thermoplastic polyurethane elastomer composition as specified in 1. wherein the chain extender is 1,3-propanediol, 1,5-pentanediol, 1,12-dodecanediol, 1,4-butanediol (1,4-BDO), 1,6-hexanediol (1,6-HDO) or hydroquinone di(β-hydroxyethyl)ether (HQEE), or mixtures thereof.
4. An article of manufacture that is comprised of the soft, semicrystalline, thermoplastic polyurethane elastomer composition of any one of 1. to 3. overmolded onto a hard substrate.
5. The soft semicrystalline, hydrophobic thermoplastic polyurethane block copolymer as specified in (I) of 1. which is comprised of the reaction product of (1) a hydrophobic polyol as defined in 1., (2) a polyisocyanate, and (3) a linear chain extender containing 5 carbon atoms or 7 to 12 carbon atoms; wherein the hydrophobic polyol has a number average molecular weight which is within the range of 1,000 to 4,000 Daltons; wherein the semicrystalline, hydrophobic thermoplastic polyurethane block copolymer has a weight average molecular weight which in within the range of 50,000 to 1,000,000 Daltons; and wherein the semicrystalline, hydrophobic thermoplastic polyurethane block copolymer has a melting point which is within the range of 80 °C to 150 °C as measured by ASTM D-3417-99 using a differential scanning calorimeter.
6. A semicrystalline, hydrophobic thermoplastic polyurethane block copolymer as specified in 5., wherein the semicrystalline, hydrophobic thermoplastic polyurethane block copolymer has a specific gravity of less than 1.1 g/cm³ as measured by ASTM D-792.
7. A semicrystalline, hydrophobic thermoplastic polyurethane block copolymer as specified in 5. wherein the polyisocyanate is a diisocyanate.
8. A semicrystalline, hydrophobic thermoplastic polyurethane block copolymer as specified in 5. wherein the hydrophobic polyol is a branched dimerized fatty acid preferably wherein the branched dimerized fatty acid contains 36 carbon atoms.
9. A semicrystalline, hydrophobic thermoplastic polyurethane block copolymer as specified in 5. wherein the linear chain extender is 1,12-dodecane diol.
10. A semicrystalline, hydrophobic thermoplastic polyurethane block copolymer as specified in 5. wherein the semicrystalline, hydrophobic thermoplastic polyurethane block copolymer has a melting point which is within the range of 110 °C to 140 °C, or wherein the semicrystalline, thermoplastic polyurethane has a glass transition temperature of less than 0 °C, wherein both the melting point and the glass transition temperature are measured by DSC between -100 °C and 250 °C using a heating and cooling rate of 10 °C/min.
11. A soft, semicrystalline thermoplastic polyurethane elastomer composition which is comprised of the semicrystalline, hydrophobic thermoplastic polyurethane block copolymer specified in 5. and from 1 weight percent to 80 weight percent mineral oil, based upon the total weight of the elastomer composition.
12. An article of manufacture as specified in 4. wherein the soft, semicrystalline hydrophobic thermoplastic polyurethane block copolymer is comprised of the reaction product of (1) a hydrophobic polyol, (2) a polyisocyanate, and (3) a linear chain extender containing 5 carbon atoms or 7 to 12 carbon atoms; wherein the hydrophobic polyol has a number average molecular weight which is within the range of 1,500 to 4,000 Daltons; wherein the soft, semicrystalline hydrophobic thermoplastic polyurethane block copolymer has a weight average molecular weight which is within the range of 50,000 to 1,000,000 Daltons; and wherein the soft, semicrystalline hydrophobic thermoplastic polyurethane block copolymer has a melting point which is within the range of 80 °C to 150 °C as measured by ASTM D-3417-99 using a DSC.

The soft, hydrophobic, semicrystalline, thermoplastic elastomer compositions of this invention offer a unique array of chemical and physical characteristics that are highly desirable for a variety of applications in manufacturing consumer and industrial products. These compositions are hydrophobic and typically have a Shore A hardness which is within the range of 20 to 80 coupled with a low specific gravity of less than 1.0 g/cm³. In some cases, the elastomeric compositions of this invention have a specific gravity of less than 0.97 g/cm³. They also normally offer low tensile set. The soft, hydrophobic, semicrystalline, thermoplastic elastomer of this invention also typically exhibits a glass transition temperature of less than 0°C. This unique combination of properties makes the soft, hydrophobic, semicrystalline, thermoplastic elastomer composition of this invention beneficial for utilization in manufacturing adhesives, protective coatings, printing blankets, and overmolded grips for various consumer products.

Also disclosed is to a soft, hydrophobic, semicrystalline, thermoplastic polyurethane that offers a unique array of chemical and physical characteristics that are highly desirable for a variety of applications in manufacturing consumer and industrial products. More specifically, this TPU exhibits high tensile strength and high elongation at break coupled with a melting point of less than 175°C. This TPU is also hydrophobic, has a density of less than 1.1, offers low tensile set, and can be swollen in mineral oil. This TPU also typically exhibits a glass transition temperature of less than 0°C. This unique combination of properties makes the TPU of this embodiment of the invention beneficial for utilization in manufacturing adhesives, protective coatings, printing blankets, and overmolded grips for various consumer products.

It is desirable for such soft thermoplastic polyurethanes to be further comprised of a mineral oil to make the composition even softer and to reduce the total cost of the material.

Also disclosed is a compatibilized blend of a thermoplastic elastomer and a polyolefin, comprising: from 5 to 95 percent by weight of the thermoplastic elastomer and from 95 to 5 percent by weight of the polyolefin based upon the total weight of said thermoplastic elastomer and said polyolefin in the blend, and an effective amount of a compatibilizing agent to compatibilize said thermoplastic elastomer and said polyolefin, said compatibilizing agent being a semicrystalline, thermoplastic polyurethane which is comprised of the reaction product of (1) a hydrophobic polyol, (2) a polyisocyanate, and (3) a linear chain extender containing 5 carbon atoms or 7 to 12 carbon atoms; wherein the hydrophobic polyol has a number average molecular weight which is within the range of 1,000 to 4,000; wherein the semicrystalline, thermoplastic polyurethane has a weight average molecular weight which is within the range of 50,000 to 1,000,000; and wherein the semicrystalline, thermoplastic polyurethane has a melting point which is within the range of 80°C to 150°C. The effective amount of said compatibilizing agent in such blends will typically be within the range of 0.25 to 15 parts by weight per 100 parts by total weight of said thermoplastic elastomer and said polyolefin in the blend.

### DETAILED DESCRIPTION OF THE INVENTION

The hydrophobic thermoplastic block copolymer used in the mineral oil containing compositions of this invention is a polyurethane (TPU). The thermoplastic polyurethane (TPU) that is used in the practice of this invention is described above.

It may have a melting point of more than 90°C.

COPA polymers that are made by reacting a lactam, a polyol, and a polyacyl lactam are described by United States Patent 4,223,112.

The hydrophobic thermoplastic block copolymer utilized in manufacturing the compositions of this invention is typically the reaction product of (1) the at least one hydrophobic polyol described above, (2) a polyisocyanate, and (3) the at least one chain extender containing 2 to 20 carbon atoms. The technique under which these reactants are polymerized to synthesize the thermoplastic polymer is conducted utilizing conventional equipment, catalysts, and procedures. However, the polymerization is conducted in a manner that will result in attaining a weight average molecular weight which is within the range of 50,000 to 1,000,000 Daltons. It is also, of course, conducted utilizing at least one hydrophobic polyol and at least one chain extender containing 2 to 20 carbon atoms. The chain extender will typically be a linear chain extender that contains from 2 to 12 carbon atoms.

The hydrophobic polyol used in synthesizing the hydrophobic thermoplastic block copolymers used in the practice of this invention is a polyester polyol prepared from fatty diols and/or fatty diacids, or mixtures thereof. sold by Kraton Polymers of Houston, Texas.

Diacid polyester polyols containing from 8 to 44 carbon atoms are well suited for utilization as the hydrophobic polyol in the practice of this invention. Fatty diacids (and esters thereof) are a well known commercially available class of dicarboxylic acids (or esters). According to the invention they are prepared by dimerizing unsaturated long chain aliphatic monocarboxylic acids, usually of 13 to 22 carbon atoms, or their esters (alkyl esters). Said dimer acid will usually contain 26 to 44 carbon atoms. Particularly, examples include dimer acids (or esters) derived from C₁₈ and C₂₂ unsaturated monocarboxylic acids (or esters) which will yield, respectively, C₃₆ and C₄₄ dimer acids (or esters). Dimer acids derived from C₁₈ unsaturated acids, which include acids such as linoleic and linolenic are particularly well known (yielding C₃₆ dimer acids). For example DELTA 9, 11 and DELTA 9, 12 linoleic acids can dimerise to a cyclic unsaturated structure (although this is only one possible structure; other structures, including acyclic structures are also possible).

The dimer acid products will normally also contain proportions of trimer acids (C₅₄ acids when using C₁₈ starting acids), possibly even higher oligomers and also small amounts of the monomer acids. Several different grades of dimer acids are available from commercial sources and these differ from each other primarily in the amount of monobasic and trimer acid fractions and the degree of unsaturation. Priplast™ polyester polyols are branched C₃₆ dimerized fatty acids which are particularly useful as the hydrophobic polyol in the practice of this invention. Priplast™ polyester polyols are commercially available from Croda Uniqema Inc. of Gouda, The Netherlands. The hydrophobic polyol used in synthesizing the TPU of this invention will typically have a number average molecular weight which is within the range of 1,500 to 4,000 Daltons and will preferably have a number average molecular weight which is within the range of 2,000 to 3,000 Daltons.

The chain extender that can be used in synthesizing the hydrophobic thermoplastic block copolymer include organic diols or glycols having from 2 to 20 carbon atoms, such as alkane diols (straight chained and branched), cycloaliphatic diols, and alkylaryl diols. Alkane diols which have a total from to 12 carbon atoms are often utilized. Some representative examples of alkane diols that can be used include ethanediol, propane glycol, 1,6-hexanediol (1,6-HDO), 1,3-butanediol (1,3-BDO), 1,5-pentanediol, neopentylglycol (NPG), 2-butyl-2-ethyl-1,3-propanediol, 2,4-diethyl-1,5-pentanediol, 3-methyl-1,5-pentanediol, and 1,4-butanediol. Dialkylene ether glycols, such as diethylene glycol and dipropylene glycol, can also be used as the chain extender. Examples of suitable cycloaliphatic diols include 1,2-cyclopentanediol, 1,4-cyclohexanedimethanol (CHDM) and the like. Examples of suitable alkylaryl diols include hydroquinone di(β-hydroxyethyl)ether (HQEE), 1,4-benzenedimethanol, bisethoxy biphenol, bisphenol A ethoxylates, and bisphenol F ethoxylates. Still other suitable chain extenders are 1,3-di(2-hydroxyethyl)benzene, and 1,2-di(2-hydroxyethoxy)benzene, Mixtures of the above noted chain extenders can also be utilized.

Chain extenders with a functionality of greater than 2 may also be used with the proviso that the resulting polymer retains its thermoplastic nature and other desired chemical and physical characteristics. Examples of such chain extenders with a functionality greater than 2 include trimethylolpropane, glycerin, and pentraerythritol. Normally, chain extenders with a functionality greater than 2 are used in conjunction with difunctional chain extenders to limit the degree of resulting chain branching. Accordingly, the level of chain extenders with a functionality greater than 2 typically does not exceed 10 mole percent of the total amount of chain extenders used in making the thermoplastic polymer. In other words, difunctional chain extenders will typically represent at least 90 mole percent of the total amount of chain extenders used in synthesizing the polymer.

The linear chain extenders that are typically preferred for used in making the thermoplastic block copolymers (TBCs) of this invention and will typically be of the structural formula: 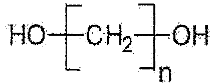 wherein n represents an integer from 2 to 20 and wherein n typically represents an integer from 2 to 12. Accordingly, the linear chain extender will typically be selected from the group consisting of ethylene glycol, 1,3-propane diol, 1,4-butane diol, 1,5-pentane diol, 1,6-hexane diol, 1,7-heptane diol, 1,8-optane diol, 1,9-nonane diol, 1,10-decane diol, 1,11-undecane diol, and 1,12-dodecane diol. However, it should be appreciated that various mixtures of diols can be utilized as the chain extender in the practice of this invention.

The polyisocyanate used in synthesizing the thermoplastic polymer is preferably a diisocyanate, While aliphatic diisocyanates can be utilized, aromatic diisocyanates are highly preferred. Moreover, the use of multifunctional isocyanate compounds, i.e., triisocyanates, which cause crosslinking, are generally avoided and thus the amount used, if any, is generally less than 4 mole percent and preferably less than 2 mole percent based upon the total moles of all of the various isocyanates used. Suitable diisocyanates include aromatic diisocyanates such as: 4,4'-methylene bis-(phenyl isocyanate) (MDI); m-xylene diisocyanate (XDI), phenylene-1-4-diisocyanate, naphthalene-1,5-diisocyanate, diphenylmethane-3,3-dimethoxy-4,4'-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate. Dimers and trimers of the above diisocyanates may also be used as well as a blend of two or more diisocyanates may be used.

The polyisocyanate used in this invention may be in the form of a low molecular weight polymer or oligomer which is end capped with an isocyanate. For example, a hydroxyl terminated polyether or polyester intermediate may be reacted with an isocyanate-containing compound to create a low molecular weight polymer end capped with isocyanate. In the TPU art, such materials are normally referred to as pre-polymers. Such pre-polymers normally have a number average molecular weight (Mn) which is within the range of 1000 to 10,000 Daltons.

The mole ratio of the one or more diisocyanates is generally from 0.95 to 1.05, and preferably from 0.98 to 1.03 moles per mole of the total moles of the one or more hydrophobic polyols and the one or more chain extenders. The molar ratio of the chain extender to the polyol will typically be within the range of 0.3:1 to 5:1 and will more typically be within the range of 0.4:1 to 4:1. The molar ratio of the chain extender to the polyol will preferably be within the range of 0.5:1 to 3:1 and will more preferably be within the range of about 0.5:1 to 2:1.

Preferably, the molar ratio of the chain extender to the diisocyanate is within the range of 0.3:1 to 10:1, more preferably 0.5:1 to 3:1, even more preferably 0.5:1 to 2:1.

A wide variety of aromatic dicarboxylic acids can be utilized in synthesizing the hydrophobic thermoplastic block copolyesters used in accordance with this invention. The aromatic dicarboxylic acid will typically contain from 8 to 16 carbon atoms. Some representative examples of aromatic dicarboxylic acids that can be used include terephthalic acid, isophthalic acid, orthophthalic acid, 1,8-naphthalenedicarboxylic acid, 1,7-naphthalenedicarboxylic acid, 1,6-naphthalenedicarboxylic acid, 1,5-naphthalenedicarboxylic acid, 2,6-naphthalenedicarboxylic acid, 2,7-naphthalenedicarboxylic acid, 1,7-anthracenedicarboxylic acid, 2,6-anthracenedicarboxylic acid, 2,7-anthracenedicarboxylic acid, 2,6-phenalenedicarboxylic acid, 1,6-phenalenedicarboxylic acid, 1,7-phenalenedicarboxylic acid, 2,8-naphthacenedicarboxylic acid, 2,9-naphthacenedicarboxylic acid, 1,7-naphthacenedicarboxylic acid, 1,10-naphthacenedicarboxylic acid, 2,7-pyrenedicarboxylic acid, 2,6-pyrenedicarboxylic acid, and 2,8-pyrenedicarboxylic acid. The preferred aromatic dicarboxylic acids include terephthalic acid, isophthalic acid, and 2,6-naphthalenedicarboxylic acid with terephthalic acid typically being the most preferred.

The hydrophobic thermoplastic block copolymers used in manufacturing the products of this invention can be a polyurethane, a copolyester, a copolyamide or a polyurethaneurea. However, TPUs are typically used as the hydrophobic thermoplastic block copolymer. Hydrophobic thermoplastic block copolymers, such as TPUs, that are useful in making the articles of this invention can be synthesized utilizing the same techniques and equipment as are used in making conventional hydrophobic thermoplastic block copolymers. For instance, in synthesizing hydrophobic thermoplastic block copolymers that are suitable for use in the practice of this invention, the hydrophobic polyol, the diisocyanate, and the chain extender are generally added together and reacted in accordance with any conventional urethane reaction method. Preferably, the TPU forming components of the present invention are melt polymerized in a suitable mixer, such as an internal mixer (a Banbury mixer), or preferably an extruder. In the preferred process, the hydrophobic polyol is blended with the glycol chain extender and added to the extruder as a blend, The diisocyanate is added separately to the extruder. Suitable processing or polymerization starting temperatures of the diisocyanate is from 100°C to 200°C, and preferably from 100°C to 150°C. Suitable processing or polymerization starting temperatures of the blend of the hydrophobic polyol and the chain extender is from 100°C to 220°C, and preferably from 150°C to 200°C. Suitable mixing times in order to enable the various components to react and form the TPU polymers of the present invention are generally from about 2 to 10 minutes, and preferably from 3 to 5 minutes.

The preferred process to produce the TPU is the process referred to as the one-shot polymerization process. In the one-shot polymerization process which generally occurs in situ, a simultaneous reaction occurs between three components, that is the one or more hydrophobic polyol, the chain extender, and the diisocyanate. The reaction is generally initiated at a temperature of from 90°C to 200°C. In as much as the reaction is exothermic, the reaction temperature generally increases to 220°C to 250°C. The TPU polymer will exit the reaction extruder and will typically be pelletized. The pellets of TPU are normally stored in a heated vessel to continue the reaction and to dry the TPU pellets.

It is often desirable to utilize catalysts such as stannous and other metal carboxylates as well as tertiary amines. Examples of metal carboxylates catalysts include stannous octoate, dibutyl tin dilaurate, phenyl mercuric propionate, lead octoate, iron acetylacetonate, magnesium acetylacetonate, and the like. Examples of tertiary amine catalysts include triethylene diamine, and the like. The amount of the one or more catalysts is low, generally from 50 to 100 parts by weight per million parts by weight of the end TPU polymer formed.

The weight average molecular weight (Mw) of the TPU polymer used in the practice of this invention will typically be in the range of 50,000 to 1,000,000 Daltons, preferably from 100,000 to 500,000 Daltons, and more preferably from 120,000 to 400,000 Daltons. The Mw of the TPU polymer is measured according to gel permeation chromatography (GPC) against polystyrene standard.

When a higher molecular weight TPU polymer is desired, it can be achieved by using a small amount of a cross linking agent having an average functionality greater than 2.0 to induce cross linking. The amount of cross linking agent used is preferably less than 2 mole percent of the total moles of chain extender, and more preferably less than 1 mole percent. A particularly desirable method to increase the molecular weight in the preferred TPU polymer is to replace less than 1 mole percent of the chain extender with trimethylol propane (TMP).

The cross linking is accomplished by adding a cross linking agent having an average functionality greater than 2,0 together with the hydrophobic polyol, the isocyanate compound, and chain extender in the reaction mixture to manufacture the TPU polymer. The amount of cross linking agent used in the reaction mixture to make the TPU polymer will depend on the desired molecular weight and the effectiveness of the particular cross linking agent used. Usually, less than 2.0 equivalent percent, and preferably less than 1.0 equivalent percent, based on the total equivalents of hydroxyls from all sources (from the one or more chain extenders and one or more hydrophobic polyols) used in making the TPU polymer are used. Levels of cross linking agent greater than 2.0 equivalent percent, based on the total equivalents of hydroxyls would be difficult to melt process. Therefore, the level of cross linking agent used is from 0.05 mole equivalent to 2.0 equivalent percent based on the total equivalents of hydroxyls from all sources.

The cross linking agents can be any monomeric or oligomeric materials which have an average functionality of greater than 2.0 and have the ability to cross link the TPU polymer. Such materials are well known in the art of thermoset polymers. Preferred cross linking agents include trimethylol propane (TMP) and pentaerythritol. Trimethylol propane has been found to particularly be a desirable cross linking agent.

The TPUs utilized in the practice of this invention are typically the reaction product of (1) the hydrophobic polyol described above, (2) a polyisocyanate, and (3) a linear chain extender containing 2 to 12 carbon atoms. The technique under which these reactants are polymerized to synthesize the thermoplastic polyurethane is conducted utilizing conventional equipment, catalysts, and procedures. However, the polymerization is conducted in a manner that will result in attaining a weight average molecular weight which is within the range of 50,0.00 to 1,000,000 Daltons. It is also, of course, conducted utilizing a hydrophobic polyol and a linear chain extender containing 2 to 12 carbon atoms.

A mineral oil is added to the hydrophobic thermoplastic block copolymers to make the soft, semicrystalline, thermoplastic elastomer compositions of this invention. The hydrophobic thermoplastic block copolymer can also be mixed with various conventional additives or compounding agents, such as fillers, extenders, pigments, lubricants, UV absorbers, plasticizers and the like. Fillers that can be used include talc, silicates, clays, calcium carbonate, and the like. The level of conventional additives will depend on the final properties and cost of the desired end-use application, as is well known to those skilled in the art of compounding TPUs. The additives *(including the mineral oil)* can be added during the reaction used to form the hydrophobic thermoplastic block copolymer or can be added in a second compounding step. The mineral oil can conveniently be mixed with the polyol and then incorporated into the polymer as it is synthesized or added separately. The mineral oil does not preclude the reactions used in making the polyurethane from occurring. In the alternative, the mineral oil can be added in the preformed polymer utilizing conventional mixing and/or sorption techniques.

From 1 weight percent to 80 weight percent of the mineral oil will be incorporated into the elastomer compositions of this invention (based upon the total weight of the elastomer composition). Typically, from 10 weight percent to 70 weight percent of the mineral oil will be incorporated into the polyurethane composition. More typically, from 15 weight percent to 50 weight percent of the mineral oil will be incorporated into the elastomer composition. In many cases, from 20 weight percent to 45 weight percent of the mineral oil will be incorporated into the elastomer composition.

The mineral oil utilized in the practice of this invention can be any oil composition selected from any of the base oils in Groups I-V as specified in the American Petroleum Institute (API) Base Oil Interchangeability Guidelines. The five base oil groups are as follows:

| Base Oil Category | | Sulfur(%) | | Saturates (%) | Viscosity Index |
|---|---|---|---|---|---|
| Group I | | >0.03 | and/or | <90 | 80 to 120 |
| Group II | | <0.03 | and | >90 | 80 to 120 |
| Group III | | <0.03 | and | >90 | >120 |
| Group IV | All polyalphaolefins (PAOs) | | | | |
| Group V | All others not included in Groups I, II, III or IV | | | | |

Groups I, II and III are mineral oil base stocks. The oil of lubricating viscosity, then, can include natural or synthetic lubricating oils and mixtures thereof. Mixture of mineral oil and synthetic oils, particularly polyalphaolefin oils and polyester oils, are often used.

Natural oils include animal oils and vegetable oils (e.g. castor oil, lard oil and other vegetable acid esters) as well as mineral lubricating oils, such as liquid petroleum oils and solvent-treated or acid treated mineral lubricating oils of the parafftnic, naphthenic or mixed paraffinic-naphthenic types can be useful in the practice of this invention. Hydrotreated or hydrocracked oils are included within the scope of useful oils of lubricating viscosity. Alkyl esters of vegetable oils, such as methyl esters of vegetable oils, ethyl esters of vegetable oils, and mixtures thereof, can also be used as the mineral oil in the practice of this invention.

Oils of lubricating viscosity derived from coal or shale are also useful. Synthetic lubricating oils include hydrocarbon oils and halosubstituted hydrocarbon oils, such as polymerized and interpolymerized olefins and mixtures thereof, alkylbenzenes, polyphenyl, (e.g., biphenyls, terphenyls, and alkylated polyphenyls), alkylated diphenyl ethers and alkylated diphenyl sulfides and their derivatives, analogs and homologues thereof. Alkylene oxide polymers and interpolymers and derivatives thereof, and those where terminal hydroxyl groups have been modified by, for example, esterification or etherification, constitute other classes of known synthetic lubricating oils that can be used. Another suitable class of synthetic lubricating oils that can be used comprises the esters of dicarboxylic acids and those made from C₅ to C₁₂ monocarboxylic acids and polyols or polyol ethers.

Other synthetic lubricating oils include liquid esters of phosphorus-containing acids, polymeric tetrahydrofurans, silicon-based oils such as the poly-alkyl-, polyaryl-, polyalkoxy-, or polyaryloxy-siloxane oils, and silicate oils.

Hydrotreated naphthenic oils are also known and can be used. Synthetic oils may be used, such as those produced by Fischer-Tropsch reactions and typically may be hydroisomerised Fischer-Tropsch hydrocarbons or waxes. In one embodiment oils may be prepared by a Fischer-Tropsch gas-to-liquid synthetic procedure as well as other gas-to-liquid oils.

Unrefined, refined and rerefined oils, either natural or synthetic (as well as mixtures of two or more of any of these) of the type disclosed hereinabove can be used in the compositions of the present invention. Unrefined oils are those obtained directly from a natural or synthetic source without further purification treatment. Refined oils are similar to the unrefined oils except they have been further treated in one or more purification steps to improve one or more properties. Rerefined oils are obtained by processes similar to those used to obtain refined oils applied to refined oils which have been already used in service. Such rerefined oils often are additionally processed by techniques directed to removal of spent additives and oil breakdown products.

The paraffinic mineral oils that can be used in the practice of this invention are typically a mixture of alkanes that are liquids at room temperature (about 20°C). These paraffin oils are comprised primarily of compounds of the general formula: CₙH₂ₙ+₂ wherein n represents an integer from 6 to 20. However, relatively small amounts of alkanes having higher molecular weights (wherein n is greater than 20) can be present in the paraffinic mineral oil. These paraffinic mineral oils are sometimes referred to as liquid paraffins, nujol, adepsine oil, alboline, glymol, medicinal paraffin, saxol, or USP mineral oil. Paraffinic mineral oils typically have a density which is within the range of 0.75 g/cm³ to 0.88 g/cm³.

Naphthenic mineral oils can be contrasted to paraffinic mineral oils in that they typically contain from 40 weight percent to 100 weight percent cycloalkanes (naphthenes) and from 0 weight percent to 60 weight percent paraffinic. mineral oils. The low-temperature behavior of naphthenic oils is better than that of paraffinic oils, making them suitable for applications that require a low pour point. However, it should be noted that naphthenic mineral oils have different solvent properties than paraffinic mineral oils.

The mineral oil used in making the polyurethane compositions of this invention can be a paraffinic mineral oil, It can be void of cycloalkanes or it can be a mixture of a paraffinic mineral oil and a naphthenic mineral oil. Normally, the mineral oil will contain less than 20 weight percent cycloalkanes and will typically contain less than 10 weight percent cycloalkanes.

Thermoplastic elastomer compositions of this invention are particularly useful as overmolding compositions for utilization in making soft grips and handles for consumer products. In any case, the mineral oil acts to swell the TPU making it softer. The addition of the mineral oil also typically reduces the overall material cost of the TPU composition.

The thermoplastic elastomer compositions of this invention have a melting point which is typically greater than 90°C as measured by ASTM D-3417-99 using a differential scanning calorimeter (DSC). However, in the case of very soft polymers the Kofler method can be used to measure the melting point of the thermoplastic elastomer. They also typically have a Shore A hardness of less than 80. In many cases the thermoplastic elastomer compositions of this invention have a Shore A hardness of less than 70 or even less than 60. These elastomeric compositions will normally have a Shore A hardness which is within the range of 20 to 80 and will generally have a Shore A hardness which is within the range of 30 to 70.

The mineral oil containing thermoplastic elastomer compositions of this invention offer excellent resistance against compression set and tensile set. For instance, the thermoplastic elastomer compositions of this invention typically offer a tensile set at 200% strain of less than 30%, preferably less than 20%, and most preferably less than 15% when tested at 23°C and in accordance with ASTM D412. They also offer high tensile strengths of over 500 psi (3.4 x 10⁶ Pascals) and elongations to break of greater than 500%. The thermoplastic elastomers of this invention will preferable have a tensile strength of greater than 700 psi (4.8 x 10⁶ Pascals) and will most preferably exhibit a tensile strength of greater than 1000 psi (6.9 x 10⁶ Pascals).

Thermoplastic elastomer compositions of this invention have characteristics that make them particularly desirable for utilization in manufacturing overmolded consumer products. In other words, the thermoplastic elastomers of this invention can be overmolded onto a hard substrate, such as a plastic or metal surface, to produce a soft grip or handle. The thermoplastic elastomer compositions of this invention offers excellent touch characteristics and low cost in such overmolding applications. It is also essentially odor-free, scratch resistant and can be colored as desired. More specifically, the thermoplastic elastomer compositions of this invention offers a low cost, gentle to the touch material for easy to grip handles that can by easily overmolded onto a hard thermoplastic resin or metal substrates.

The thermoplastic elastomer compositions of this invention can be beneficially used in making grips or handles for articles of manufacture including, but not limited to, toothbrushes, shaving razors, hairbrushes, hairdryers, paintbrushes, pens, tools (saws, hammers, screwdrivers, wrenches, pliers), kitchen appliances (handles for refrigerator doors, ovens, dishwashers, bread warmers, trash compactors), kitchen utensils (spoons, forks, knives, spatulas, shish kabob skewers, vegetable peelers, can openers, bottle openers, corkscrews, whisks, basting brushes), vacuum cleaner handles, brooms, mops, rakes, shovels, scissors, sporting equipment (fishing poles, tennis rackets, firearms, and golf clubs), and dinghy brushes. The present invention more specifically discloses an article of manufacture that is comprised of the soft thermoplastic elastomer composition of this invention which is overmolded onto a hard substrate, such as a metal or thermoplastic resin.

This invention is illustrated by the following examples. Unless specifically indicated otherwise, parts and percentages are given by weight.

In the following experiments a series of TPU polymers were synthesized using the same general procedure with different chain extenders and in some cases with various types of oils being included.

### Example 1-6

The procedure used involved heating a blend of hydrophobic polyol and chain extender, and diisocyanate separately to about 120°C and then mixing the ingredients. The viscosity of the reaction mixture was observed to significantly increase in about 1 to 5 minutes at during which time the reaction vessel was emptied and the polymerizate was allowed to slowly cool to room temperature. The chain extender employed and the ratio of chain extender to polyisocyanate used are reported in Table 1. Stannous octoate was used as a catalyst at a level of 50 ppm in each example. In this series of experiments mineral oil was mixed into the polyol used in making the polyurethane. The amount of mineral oil added is shown in Table 1 along with physical properties of the thermoplastic polymers made.

**Table 1**

| Example | ASTM Test Method | Units | 1 | 2 | 3 | 4 | 5 | 6 |
|---|---|---|---|---|---|---|---|---|
| Priplast™ 3197 | | | 189.75 | 189.75 | 189.75 | 189.75 | 189.75 | 189.75 |
| 1,12-dodecanediol | | | 10.25 | 10.25 | 10.25 | 10.25 | 10.25 | 10.25 |
| White Paraffin oil* (180-190 SV) | | | 23.7 | 47.4 | 47.4 | 71.1 | 71.1 | 118.5 |
| MDI | | | 37.61 | 37.23 | 37.61 | 37.23 | 37.61 | 37.61 1 |
| Hardness | D2240 | Shore A | 62 | 56 | 58 | 54 | 43 | 38 |
| Ultimate Tensile | D412 | psi | 1610 | 1300 | 1510 | 962 | 986 | 872 |
| Ultimate Elongation | D412 | % | 489 | 842 | 774 | 717 | 322 | 755 |
| Stress @ 50% | D412 | psi | 294 | 221 | 225 | 175 | 195 | 131 |
| Stress @ 100% | D412 | psi | 511 | 347 | 354 | 288 | 366 | 288 |
| Stress @ 300% | D412 | psi | 1130 | 553 | 600 | 497 | 0 | 410 |
| Graves Tear (die C) | D624 | Ib/in | 228 | 187 | 179 | 165 | 169 | 120 |
| Trouser Tear | D470 | Ib/in | 44 | 50 | 49 | 36 | 33 | 28 |
| Tensile Set (200%) | D412 | | 10 | 9.8 | 10.7 | 10.7 | 11.2 | 10.8 |
| Taber Abrasion (H-18, 1000 g) | D3389 | mg | 48 | 263 | 174 | 377 | 227 | 480 |
| Tg (DSC, 2^{nd} heat)** | | °C | -40 | -50 | -45 | -51 | -51 | -39 |
| Tin (DSC, 2^{nd}heat)** | | °C | 111 | 112 | 112 | 113 | 109 | 1 |
| Tc (DSC)** | | °C | 46 | 49 | 49 | 51 | 48 | 51 |

| | | | | | | | | |
|---|---|---|---|---|---|---|---|---|
| * sold by VWR ** DSC were measured between -100°C and 250°C using heating and cooling rates of 10°C/mm on a Perkin Elmer instrument Conversion: 1 psi = 6890 Pa; 1 lb/in = 0.175 N/mm | | | | | | | | |

### Examples 7-10

The general procedure used in Examples 1-6 was repeated in this series of experiments. Stannous octoate was again used as a catalyst at a level of 50 ppm in each example. The amount of mineral oil added is shown in Table 2 along with physical properties of the thermoplastic polymers made.

**Table 2**

| Example | ASTM Test Method | Units | 7 | 8 | 9 | 10 |
|---|---|---|---|---|---|---|
| Priplast™ 3197 | | | 190,00 | 185.00 | 178.00 | 170.00 |
| HQEE | | | 10.00 | 15.00 | 22.00 | 30.00 |
| White Paraffin (80-90 SV)* | | | 118.50 | 118.50 | 118.50 | 118.50 |
| MDI | | | 37.58 | 43.25 | 51.18 | 60.25 |
| Ultimate Tensile | D412 | psi | 561 | 660 | 655 | 675 |
| Ultimate Elongation | D412 | % | 471 | 305 | 307 | 196 |
| Stfess@ 50% | D412 | psi | 125 | 212 | 243 | 309 |
| Stress @ 100% | D412 | psi | 222 | 360 | 397 | 505 |
| Stress @ 300% | D412 | psi | 364 | | | |
| Hardness | D2240 | Shore A | 43 | 51 | 55 | 58 |
| Graves Tear (die C) | D624 | lb/in | 101 | 123 | 110 | 103 |
| Trouser Tear | D470 | lb/in | 23 | 31 | 28 | 26 |
| Specific Gravity | D792 | g/cm³ | 0,936 | 0.944 | 0.948 | 0.972 |
| Tensile Set (200%) | D412 | | 10 | 9.8 | 10.7 | 10.7 |
| Tg (DSC,2^{nd} heat)** | | °C | -54 | -53 | -50 | -54 |
| Tm (DSC, 2^{nd} heat)** | | °C | 212 | 213 | 212 | 212 |
| Tc (DSC)** | | °C | 96 | 95 | 96 | 99 |

| | | | | | | |
|---|---|---|---|---|---|---|
| * sold by VWR ** DSC were measured between -100°C and 250°C using heating and cooling rates of 10°C/min on a Perkin Elmer instrument Conversion: 1 psi = 6890 Pa; 1 lb/in = 0.175 N/mm | | | | | | |

### Examples 11-12

The general procedure used in Examples 1-6 was again repeated in this series of experiments. Stannous octoate was again used as a catalyst at a level of 50 ppm in each example. The amount of mineral oil added is shown in Table 3 along with physical properties of the thermoplastic polymers made.

**Table 3**

| Example | | | 11 | 12 |
|---|---|---|---|---|
| Priplast™ 3197 | | | 189.75 | 189.75 |
| 1,12-dodecanediol | | | 10.25 | 10.25 |
| Hydrocal 38 mineral oil, viscosity = 1.3 cSt | | | 175 | - |
| Calsol 810 mineral oil, viscosity = 4 cSt | | | | 175 |
| MDI | | | 37.61 | 43.61 |
| | ASTM Test Method | Units | | |
| Ultimate Tensile | D412 | psi | 720 | 673 |
| Ultimate Elongation | D412 | % | 625 | 512 |
| Stress @ 50% | D412 | psi | 161 | 141 |
| Stress @ 100% | D412 | psi | 251 | 231 |
| Stress @ 300% | D412 | psi | 440 | 433 |
| Stress @ 400% | D412 | psi | 522 | 524 |
| Stress @ 500% | D412 | psi | 606 | - |
| Hardness | D2240 | Shore A | 52 | 42 |
| Graves Tear (die C) | D624 | lb/in | 124 | - |
| Trouser Tear | D470 | lb/in | 30 | 23 |
| Specific Gravity | D792 | g/cm³ | 0.941 | 0.943 |
| Tg (DSC, 2^{nd} heat)* | | °C | -38.5 | -52 |
| Tm(DSC, 2^{nd} heat)* | | °C | 112 | 110 |
| Tc (DSC)* | | °C | 43 | 48 |

| | | | | |
|---|---|---|---|---|
| * DSC were measured between -100°C and 250°C using heating and cooling rates of 10°C/min on a Petkin Elmer instrument Conversion: 1 psi = 6890 Pa; 1 Ib/in = 0.175 N/mm | | | | |

The Hytirocal 38 mineral oil and the Calson 810 mineral oil were provided by Calumet Lubricants Co. Hydrocal 38 mineral oil has a SUS viscosity at 37.8 °C (100 °F) of 38.1, a SUS viscosity at 98.9 °C (210 °F) of 30.4, a viscosity index of 83, a COC flash point of 102 °C (215 °F) a ASTM color of 10.5, a API Gravity at 15.6 °C (60 °F) of 28.9, and an aniline point of 59.4 °C (139 °F). Calsol 810 mineral oil has a SUS viscosity at 37.8 °C (100 °F) of 58.1, a SUS viscosity at 98.9 °C (210 °F) of 34.0, a viscosity gravity constant of 0.866, a COC flash point of 146 °C (295 °F), a API Gravity at 15.6 °C (60 °F) of 26.9, and an aniline point of 71.7 °C (161 °F).

### Examples 13-15

The general procedure used in Examples 1-6 was repeated in this series of experiments. Stannous octoate was again used as a catalyst at a level of 50 ppm in each example. The amount of mineral oil added is shown in Table 4 along with physical properties of the thermoplastic polymers made.

**Table 4**

| Example | | | 13 | 14 | 15 |
|---|---|---|---|---|---|
| Priplast™ 3197 | | | 189.75 | 189.75 | 189.75 |
| 1,12-dodecanediol | | | 10.25 | 10.25 | 10.25 |
| Star 4 mineral oil, viscosity = 4.2 cSt ** | | | 120 | - | - |
| Star 8 mineral oil, viscosity = 7.7 cSt ** | | | - | 120 | - |
| Ultra S-4 mineral oil, viscosity = 4.2 ** | | | - | - | 120 |
| MDI | | | 37.61 | 37.61 | 37.61 |
| | ASTM Test Method | Units | | | |
| Ultimate Tensile | D412 | psi | 726 | 683 | 659 |
| Ultimate Elongation | D412 | % | 274 | 292 | 208 |
| Stress @ 50% | D412 | psi | 283 | 243 | 341 |
| Stress @ 10.0% | D412 | psi | 452 | 366 | 544 |
| Hardness | D2240 | Shore A | 46 | 48 | 45 |
| Graves Tear (die C) | D624 | Ib/in | 111 | 130 | 94 |
| Tg (DSC, 2^{nd} heat)* | | °C | -62 | -62 | -62 |
| Tm (DSC, 2^{nd} heat)* | | °C | 113 | 111 | 112 |
| Tc (DSC)* | | °C | 51 | 49 | 50 |

| | | | | | |
|---|---|---|---|---|---|
| * DSC were measured between -100°C and 250°C using heating and cooling rates of 10°C/min on a Perkin Elmer instrument ** The Star 4 and Star 8 mineral oils as well as the Ultra S-4 mineral oil were provided by Conoco-Phillips. Conversion: 1 psi = 6890 Pa; 1 Ib/in = 0.175 N/mm | | | | | |

### Comparative Examples 16-18 and Examples 19-21.

In this experiment series all of the TPU polymers made were synthesized using the same general procedure with different chain extenders. The procedure used involved heating a blend of hydrophobic polyol and chain extender, and diisocyanate separately to about 120°C and then mixing the ingredients. The viscosity of the reaction mixture was observed to significantly increase reactions in about 1 to 5 minutes at during which time the reaction vessel was emptied and the polymerizate was allowed to slowly cool to room temperature. The chain extender employed and the ratio of chain extender to polyisocyanate used is reported in Table 5. It should be noted that Examples 16-18 are comparative examples wherein 1,4-butanediol or 2-butyl, 2-ethyl-1,3-propanediol, BEPD, were used at the chain extender. In accordance with this invention the chain extender used in Examples 19-21 (Reference Examples) was 1,12-dodecane diol. Stannous octoate was used as a catalyst at a level of 50 ppm in each example.

**Table 5**

| Example | 16 | 17 | 18 | 19 | 20 | 21 |
|---|---|---|---|---|---|---|
| Blend Weight | 183 | 185 | 190 | 180 | 188 | 194 |
| Priplast™ 3196 polyester polyol | 174.00 | 174.00 | 174.00 | 174.00 | 174.00 | 174.00 |
| 1,4-hutanediol | 9.15 | - | - | - | - | - |
| BEPD | - | 11.40 | 16.25 | - | - | - |
| 1,12-dodecatiediol | - | - | - | 5.50 | 14.00 | 20.00 |
| 4,4'-methylene bis-(phenyl isocyanate) | 39.98 | 32.20 | 39.75 | 21.23 | 31.72 | 39.12 |
| % Urethane Segment | 22.02 | 20.0 | 24.3 | 13.3 | 20.8 | 25.4 |
| Chain Extender to Diisocyanate ratio | 1.753 | 1.228 | 1.751 | 0.469 | 1.195 | 1.707 |
| Melt Index (210°C/3800 g)* | 20 | | | | | |
| Melt index (190°C/870O g)* | | 120 | 36 | 96 | 84 | 70 |
| Melting Temperature (Tm) | 193°C | ** | ** | 98°C | 134°C | 135°C |
| Glass Transition Temperature (Tg) | -45°C | -41°C | -37°C | -43°C | -43°C | -45°C |
| Crystallization Temperature (Tc) | 81°C | 44°C | 46°C | | 56°C | 65°C |
| Tensile Strength (psi) | 1170 | 198 | 880 | 1390 | 2220 | 2070 |
| Tensile Elongation | 452% | 674% | 616% | 1070% | 724% | 692% |

| | | | | | | |
|---|---|---|---|---|---|---|
| * MI values are reported in g/10 minutes ** The melting point was not be determined. Conversion: 1 psi = 6890 Pa; 1 lb/in = 0.175 N/mm | | | | | | |

As can be seen from Table 5, the TPU samples made in Examples 19-21 using 1,12-dodecane diol as the chain extender had superior tensile strength as compared to the TPUs made in Examples 16-18. It should be further noted that the TPUs made in Examples 19-21 also had tensile elongations that were superior to those made in Examples 16-18. The melting points of the polymers made in Examples 19-21 Reference Examples) were all within the range of 98°C to 135°C. This is in contrast to the TPU made in Example 16 which had a melting point of 193°C and to the polymers made in Examples 17 and 18 which were highly viscous, tacky materials such that it was not desirable to measure a melting point.

## Claims

1. A soft, semicrystalline, thermoplastic polyurethane elastomer composition which is comprised of (I) a soft, semicrystalline hydrophobic thermoplastic polyurethane block copolymer which is comprised of the reaction product of (1) at least one hydrophobic polyol, wherein said hydrophobic polyols is a diacid polyester polyol made with dimerized fatty acids and wherein said dimer fatty acid contains from 26 to 44 carbon atoms, (2) a polyisocyanate, and (3) at least one chain extender containing 2 to 20 carbon atoms; wherein the hydrophobic polyol has a number average molecular weight which is within the range of 1,000 to 4,000 Daltons and; wherein the hydrophobic thermoplastic polyurethane block copolymer has a weight average molecular weight which is within the range of 50,000 to 1,000,000 Daltons; and (II) from 1 weight percent to 80 weight percent of a mineral oil based upon the total weight of the elastomer composition.

2. A soft, semicrystalline, thermoplastic polyurethane elastomer composition as specified in claim 1 wherein the polyisocyanate is a diisocyanate.

3. A soft, semicrystalline, thermoplastic polyurethane elastomer composition as specified in claim 1 wherein the chain extender is 1,3-propanediol, 1,5-pentanediol, 1,12-dodecanediol, 1,4-butanediol (1,4-BDO), 1,6-hexanediol (1,6-HDO) or hydroquinone di(β-hydroxyethyl)ether (HQEE), or mixtures thereof.

4. An article of manufacture that is comprised of the soft, semicrystalline, thermoplastic polyurethane elastomer composition of any one of claims 1 to 3 overmolded onto a hard substrate.

5. The soft semicrystalline, hydrophobic thermoplastic polyurethane block copolymer as specified in (I) of claim 1 which is comprised of the reaction product of (1) a hydrophobic polyol as defined in claim 1, (2) a polyisocyanate, and (3) a linear chain extender containing 5 carbon atoms or 7 to 12 carbon atoms; wherein the hydrophobic polyol has a number average molecular weight which is within the range of 1,000 to 4,000 Daltons; wherein the semicrystalline, hydrophobic thermoplastic polyurethane block copolymer has a weight average molecular weight which in within the range of 50,000 to 1,000,000 Daltons; and wherein the semicrystalline, hydrophobic thermoplastic polyurethane block copolymer has a melting point which is within the range of 80 °C to 150 °C as measured by ASTM D-3417-99 using a differential scanning calorimeter.

6. A semicrystalline, hydrophobic thermoplastic polyurethane block copolymer as specified in claim 5, wherein the semicrystalline, hydrophobic thermoplastic polyurethane block copolymer has a specific gravity of less than 1.1 g/cm³ as measured by ASTM D-792.

7. A semicrystalline, hydrophobic thermoplastic polyurethane block copolymer as specified in claim 5 wherein the polyisocyanate is a diisocyanate.

8. A semicrystalline, hydrophobic thermoplastic polyurethane block copolymer as specified in claim 5 wherein the hydrophobic polyol is a branched dimerized fatty acid preferably wherein the branched dimerized fatty acid contains 36 carbon atoms.

9. A semicrystalline, hydrophobic thermoplastic polyurethane block copolymer as specified in claim 5 wherein the linear chain extender is 1,12-dodecane diol.

10. A semicrystalline, hydrophobic thermoplastic polyurethane block copolymer as specified in claim 5 wherein the semicrystalline, hydrophobic thermoplastic polyurethane block copolymer has a melting point which is within the range of 110 °C to 140 °C, or wherein the semicrystalline, thermoplastic polyurethane has a glass transition temperature of less than 0 °C, wherein both the melting point and the glass transition temperature are measured by DSC between -100 °C and 250 °C using a heating and cooling rate of 10 °C/min.

11. A soft, semicrystalline thermoplastic polyurethane elastomer composition which is comprised of the semicrystalline, hydrophobic thermoplastic polyurethane block copolymer specified in claim 5 and from 1 weight percent to 80 weight percent mineral oil, based upon the total weight of the elastomer composition.

12. An article of manufacture as specified in claim 4 wherein the soft, semicrystalline hydrophobic thermoplastic polyurethane block copolymer is comprised of the reaction product of (1) a hydrophobic polyol, (2) a polyisocyanate, and (3) a linear chain extender containing 5 carbon atoms or 7 to 12 carbon atoms; wherein the hydrophobic polyol has a number average molecular weight which is within the range of 1,500 to 4,000 Daltons; wherein the soft, semicrystalline hydrophobic thermoplastic polyurethane block copolymer has a weight average molecular weight which is within the range of 50,000 to 1,000,000 Daltons; and wherein the soft, semicrystalline hydrophobic thermoplastic polyurethane block copolymer has a melting point which is within the range of 80 °C to 150 °C as measured by ASTM D-3417-99 using a DSC.

## Patentansprüche

1. Weiche, semikristalline, thermoplastische Polyurethan-Elastomerzusammensetzung, bestehend aus (I) einem weichen, semikristallinen hydrophoben thermoplastischen Polyurethan-Blockcopolymer, das aus dem Reaktionsprodukt von (1) wenigstens einem hydrophoben Polyol, wobei es sich bei den hydrophoben Polyolen um ein Disäurepolyesterpolyol handelt, das mit dimerisierten Fettsäuren hergestellt ist, und wobei die Dimerfettsäure 26 bis 44 Kohlenstoffatome enthält, (2) einem Polyisocyanat und (3) wenigstens einem Kettenverlängerer, der 2 bis 20 Kohlenstoffatome enthält, besteht, wobei das hydrophobe Polyol ein Zahlenmittel des Molekulargewichts aufweist, das im Bereich von 1000 bis 4000 Dalton liegt, und wobei das hydrophobe thermoplastische Polyurethan-Blockcopolymer ein Gewichtsmittel des Molekulargewichts aufweist, das im Bereich von 50 000 bis 1000 000 Dalton liegt, und (II) 1 Gew.-% bis 80 Gew.-% eines Mineralöls, bezogen auf das Gesamtgewicht der Elastomerzusammensetzung.

2. Weiche, semikristalline, thermoplastische Polyurethan-Elastomerzusammensetzung gemäß Anspruch 1, wobei das Polyisocyanat ein Diisocyanat ist.

3. Weiche, semikristalline, thermoplastische Polyurethan-Elastomerzusammensetzung gemäß Anspruch 1, wobei es sich bei dem Kettenverlängerer um 1,3-Propandiol, 1,5-Pentandiol, 1,12-Dodecandiol, 1,4-Butandiol (1,4-BDO), 1,6-Hexandiol (1,6-HDO) oder Hydrochinondi(β-hydroxyethyl)ether (HQEE) oder Gemische davon handelt.

4. Erzeugnis, das aus der weichen, semikristallinen, thermoplastischen Polyurethan-Elastomerzusammensetzung gemäß einem der Ansprüche 1 bis 3, mit der ein hartes Substrat umspritzt ist, besteht.

5. Weiches, semikristallines hydrophobes thermoplastisches Polyurethan-Blockcopolymer gemäß (I) von Anspruch 1, das aus dem Reaktionsprodukt von (1) einem hydrophoben Polyol gemäß Anspruch 1, (2) einem Polyisocyanat und (3) einem linearen Kettenverlängerer, der 5 Kohlenstoffatome oder 7 bis 12 Kohlenstoffatome enthält, besteht, wobei das hydrophobe Polyol ein Zahlenmittel des Molekulargewichts aufweist, das im Bereich von 1000 bis 4000 Dalton liegt, wobei das semikristalline hydrophobe thermoplastische Polyurethan-Blockcopolymer ein Gewichtsmittel des Molekulargewichts aufweist, das im Bereich von 50 000 bis 1000 000 Dalton liegt, und wobei das semikristalline hydrophobe thermoplastische Polyurethan-Blockcopolymer einen gemäß ASTM D-3417-99 mit Hilfe eines dynamischen Differenzkalorimeters gemessenen Schmelzpunkt aufweist, der im Bereich von 80 °C bis 150 °C liegt.

6. Semikristallines hydrophobes thermoplastisches Polyurethan-Blockcopolymer gemäß Anspruch 5, wobei das semikristalline hydrophobe thermoplastische Polyurethan-Blockcopolymer eine Dichte gemäß ASTM D-792 von weniger als 1,1 g/cm³ aufweist.

7. Semikristallines hydrophobes thermoplastisches Polyurethan-Blockcopolymer gemäß Anspruch 5, wobei das Polyisocyanat ein Diisocyanat ist.

8. Semikristallines hydrophobes thermoplastisches Polyurethan-Blockcopolymer gemäß Anspruch 5, wobei das hydrophobe Polyol eine verzweigte dimerisierte Fettsäure ist, wobei vorzugsweise die verzweigte dimerisierte Fettsäure 36 Kohlenstoffatome enthält.

9. Semikristallines hydrophobes thermoplastisches Polyurethan-Blockcopolymer gemäß Anspruch 5, wobei es sich bei dem linearen Kettenverlängerer um 1,12-Dodecandiol handelt.

10. Semikristallines hydrophobes thermoplastisches Polyurethan-Blockcopolymer gemäß Anspruch 5, wobei das semikristalline hydrophobe thermoplastische Polyurethan-Blockcopolymer einen Schmelzpunkt aufweist, der im Bereich von 110 °C bis 140 °C liegt, oder wobei das semikristalline thermoplastische Polyurethan eine Glasübergangstemperatur von weniger als 0 °C aufweist, wobei sowohl der Schmelzpunkt als auch die Glasübergangstemperatur durch DSC zwischen -100 °C und 250 °C unter Verwendung einer Aufheiz- und Abkühlgeschwindigkeit von 10 °C/min gemessen werden.

11. Weiche, semikristalline, thermoplastische Polyurethan-Elastomerzusammensetzung, die aus dem semikristallinen hydrophoben thermoplastischen Polyurethan-Blockcopolymer gemäß Anspruch 5 sowie 1 Gew.-% bis 80 Gew.-% Mineralöl besteht, bezogen auf das Gesamtgewicht der Elastomerzusammensetzung.

12. Erzeugnis gemäß Anspruch 4, wobei das weiche, semikristalline hydrophobe thermoplastische Polyurethan-Blockcopolymer aus dem Reaktionsprodukt von (1) einem hydrophoben Polyol, (2) einem Polyisocyanat und (3) einem linearen Kettenverlängerer, der 5 Kohlenstoffatome oder 7 bis 12 Kohlenstoffatome enthält, besteht, wobei das hydrophobe Polyol ein Zahlenmittel des Molekulargewichts aufweist, das im Bereich von 1500 bis 4000 Dalton liegt, wobei das weiche, semikristalline hydrophobe thermoplastische Polyurethan-Blockcopolymer ein Gewichtsmittel des Molekulargewichts aufweist, das im Bereich von 50 000 bis 1 000 000 Dalton liegt, und wobei das weiche, semikristalline hydrophobe thermoplastische Polyurethan-Blockcopolymer einen gemäß ASTM D-3417-99 mit Hilfe eines DSC gemessenen Schmelzpunkt aufweist, der im Bereich von 80 °C bis 150 °C liegt.

## Revendications

1. Composition élastomère de polyuréthane thermoplastique souple, semi-cristalline, qui comprend (I) un copolymère séquencé de polyuréthane thermoplastique hydrophobe, semi-cristallin, souple, qui est composé du produit de réaction (1) d'au moins un polyol hydrophobe, où ledit polyol hydrophobe est un polyol polyester diacide préparé avec des acides gras dimérisés et où ledit acide gras dimère contient de 26 à 44 atomes de carbone, (2) d'un polyisocyanate et (3) d'au moins un allongeur de chaîne contenant de 2 à 20 atomes de carbone; où le polyol hydrophobe a un poids moléculaire moyen en nombre compris entre 1.000 et 4.000 Daltons et; où le copolymère séquencé de polyuréthane thermoplastique hydrophobe a un poids moléculaire moyen en poids compris entre 50.000 et 1.000.000 Daltons ; et (II) de 1% en poids à 80% en poids d'une huile minérale par rapport au poids total de la composition élastomère.

2. Composition élastomère de polyuréthane thermoplastique souple, semi-cristalline, selon la revendication 1, dans laquelle le polyisocyanate est un diisocyanate.

3. Composition élastomère de polyuréthane thermoplastique souple, semi-cristalline, selon la revendication 1, dans laquelle l'allongeur de chaîne est le 1,3-propanediol, le 1,5-pentanediol, le 1,12-dodécanediol, le 1,4-butanediol (1,4-BDO), 1,6-hexanediol (1,6-HDO) ou l'hydroquinone di(β-hydroxyéthyl)éther (HQEE), ou leurs mélanges.

4. Article de fabrication qui est composé de la composition élastomère de polyuréthane thermoplastique souple, semi-cristalline, selon l'une quelconque des revendications 1 à 3, surmoulée sur un substrat dur.

5. Copolymère séquencé de polyuréthane thermoplastique hydrophobe, semi-cristallin, souple tel que spécifié dans (I) de la revendication 1 qui est composé du produit de réaction (1) d'un polyol hydrophobe tel que défini dans la revendication 1, (2) d'un polyisocyanate et (3) d'un allongeur de chaîne linéaire contenant 5 atomes de carbone ou 7 à 12 atomes de carbone ; dans lequel le polyol hydrophobe a un poids moléculaire moyen en nombre compris entre 1.000 et 4.000 Daltons; dans lequel le copolymère séquencé de polyuréthane thermoplastique hydrophobe, semi-cristallin, a un poids moléculaire moyen en poids compris entre 50.000 et 1.000.000 Daltons ; et où le copolymère séquencé de polyuréthane thermoplastique hydrophobe, semi-cristallin, a un point de fusion compris entre 80 °C et 150 °C, mesuré selon la norme ASTM D-3417-99 en utilisant un calorimètre à balayage différentiel.

6. Copolymère séquencé de polyuréthane thermoplastique hydrophobe, semi-cristallin, selon la revendication 5, dans lequel le copolymère séquencé de polyuréthane thermoplastique hydrophobe, semi-cristallin, a une densité inférieure à 1,1 g/cm³ mesuré selon la norme ASTM D-792.

7. Copolymère séquencé de polyuréthane thermoplastique hydrophobe, semi-cristallin, selon la revendication 5, dans lequel le polyisocyanate est un diisocyanate.

8. Copolymère séquencé de polyuréthane thermoplastique hydrophobe, semi-cristallin, selon la revendication 5, dans lequel le polyol hydrophobe est un acide gras dimérisé ramifié, où de préférence l'acide gras dimérisé ramifié contient 36 atomes de carbone.

9. Copolymère séquencé de polyuréthane thermoplastique hydrophobe, semi-cristallin, selon la revendication 5, dans lequel l'allongeur de chaîne linéaire est le 1,12-dodécane diol.

10. Copolymère séquencé de polyuréthane thermoplastique hydrophobe, semi-cristallin, selon la revendication 5, dans lequel le copolymère séquencé de polyuréthane thermoplastique hydrophobe, semi-cristallin, a un point de fusion qui est compris entre 110 °C et 140 °C, ou
dans lequel le polyuréthane thermoplastique semi-cristallin a une température de transition vitreuse inférieure à 0 °C, où le point de fusion et la température de transition vitreuse sont mesurés par DSC entre -100 °C et 250 °C en utilisant une vitesse de chauffage et de refroidissement de 10 °C/min.

11. Composition élastomère de polyuréthane thermoplastique souple, semi-cristalline qui est composée du copolymère séquencé de polyuréthane thermoplastique hydrophobe, semi-cristallin, selon la revendication 5 et de 1% en poids à 80% en poids d'huile minérale, par rapport au poids total de la composition d'élastomère.

12. Article de fabrication selon la revendication 4, dans lequel le copolymère séquencé de polyuréthane thermoplastique hydrophobe, semi-cristallin, souple, est composé du produit de réaction (1) d'un polyol hydrophobe, (2) d'un polyisocyanate et (3) d'un allongeur de chaîne linéaire contenant 5 atomes de carbone ou 7 à 12 atomes de carbone; où le polyol hydrophobe a un poids moléculaire moyen en nombre compris entre 1.500 et 4.000 Daltons; où le copolymère séquencé de polyuréthane thermoplastique hydrophobe, semi-cristallin, souple, a un poids moléculaire moyen en poids compris entre 50.000 et 1.000.000 Daltons; et où le copolymère séquencé de polyuréthane thermoplastique hydrophobe, semi-cristallin, souple, a un point de fusion qui est compris dans l'intervalle de 80 °C à 150 °C, mesuré selon la norme ASTM D-3417-99 en utilisant un DSC.
